# EUROPÄISCHE PATENTSCHRIFT

(11) **EP 1 004 353 B1**
(45) Veröffentlichungstag und Bekanntmachung des Hinweises auf die Patenterteilung: **29.01.2003**
(21) Anmeldenummer: 99120750.7
(22) Anmeldetag: 20.10.1999
(51) Int. Cl.: B01F 13/00

(54) **Vorrichtung zum Mischen und dosierten Abgeben von fliessfähigen Mehrkomponentenmassen**
Device for mixing and dosed dispensing of free-flowing multicomponent pastes
Dispositif pour mélanger et pour l'application dosée des masses à écoulement libre à plusieurs composants

(30) Priorität: 04.11.1998 DE 29819661 U
(43) Veröffentlichungstag der Anmeldung: 31.05.2000
(73) Patentinhaber: Kress-elektrik GmbH + Co. Elektromotorenfabrik, D-72406 Bisingen (DE)
(72) Erfinder: Binder, Alfred, 72406 Bisingen (DE)
(74) Vertreter: Jakelski, Joachim, Dr.

(56) Entgegenhaltungen:
- EP-A- 0 492 412
- EP-A- 0 603 492
- DE-A- 2 949 369
- DE-A- 3 823 708
- US-A- 3 570 719

## Beschreibung

Die Erfindung betrifft eine Vorrichtung zum Auspressen und dosierten Abgeben von fließfähigen Mehrkomponentenmassen nach dem Oberbegriff des Anspruchs 1.

Mehrkomponentenmassen werden in zunehmendem Maße für viele Anwendungen in Industrie und Gewerbe zum Kleben, Füllen, Abdichten und dergleichen verwendet. Um eine vorzeitige Reaktion der Komponenten miteinander zu verhindern, ist es erforderlich, die einzelnen Komponenten in voreinander getrennten Kammern zu lagern.

Aus der DE 29 49 369 A geht ein Gerät zum Abgeben von Mehrkomponentenmassen hervor mit Austrittsöffnungen für die Massen aufweisenden Aufnahmeräumen, wobei den Austrittsöffnungen in Auspreßrichtung gesehen eine Drehblende nachgeschaltet ist und zur Freigabe der Austrittsöffnungen die Drehblende mit den Austrittsöffnungen zur Deckung bringbare Durchbrüche aufweist.

Die US-A-3 570 719 offenbart eine Vorrichtung zum Auspressen und dosierbaren Abgeben von fließfähigen Mehrkomponentenmassen mit einer Antriebsspindel, die sowohl kolbenartige Einsätze als auch eine Mischeinrichtung antreibt. Die Mischeinrichtung ist in einem Deckelelement angeordnet. Diese Vorrichtung muß manuell durch einen Knopf betätigt werden. Eine Betätigung beispielsweise durch einen Elektromotor ist nicht vorgesehen. Darüber hinaus ist die Mischeinrichtung Teil eines Gehäuses und insoweit nicht ohne weiteres austauschbar, insbesondere wenn sie verschmutzt ist. Auch die Auspritzdüse ist fest in das Gehäuse integriert.

Aus der EP-A-0 492 412 ist ein dynamischer Mischer bekannt, bei dem Mischerflügel von einer Antriebswelle, die in eine sechskantförmige Ausnehmung eingreift, angetrieben werden.

Aus der DE 37 05 741 A geht ferner eine Abgabevorrichtung für fließfähige Massen hervor, bei der auf die flexiblen Beutel für die einzelnen Komponenten ein Druck unter Einwirkung eines Treibmittels ausgeübt wird. Das Treibmittel wird jeweils über eine Dosiereinrichtung den in den gesonderten Behältern angeordneten Beuteln zugeführt. Die Dosiereinrichtungen sind vorzugsweise volumetrisch fördernde Pumpen, die über Elektromotoren angetrieben werden. Die fließfähigen Massen werden über in einem Deckelelement angeordente längliche Leitungen einer Mischeinrichtung zugeführt. In den Leitungen verbleibt auch bei vollständiger Entleerung der Beutel eine nicht unbeträchtliche Restmenge. Darüber hinaus weist eine solche Vorrichtung einen aufwendigen Aufbau auf, der neben einem Tank für das Treibmittel auch Druckleitungen, Entlüftungsventile und dergleichen erfordert. Um ein unbeabsichtigtes Entweichen des Treibmittels zu verhindern, müssen an dem Gehäuse Dichtelemente vorgesehen sein. Die Entlüftungsventile sind bei dieser Vorrichtung zur präzisen Dosierung vorgesehen, über sie kann Treibmittel entweichen. Eine derartige Vorrichtung ist daher auch hinsichtlich der Umweltverträglichkeit nicht unproblematisch.

Aus der EP-B-0 313 519 geht eine Einrichtung zum Dosieren und Mischen von mindestens zwei Reaktionskomponenten hervor, bei welcher über einen Spindelantrieb einerseits eine Mischeinrichtung über ein Getriebe und zwei weitere Spindelantriebe andererseits zwei kolbenartige Einsätze zum Auspressen der Kartuschen axial verschieblich geführt sind. Die beiden Reaktionskomponenten werden über Leitungen, die Bestandteil des Gehäuses sind, einer Mischeinrichtung zugeführt. Bei dieser Vorrichtung ist es zwar vorteilhaft, daß gleichzeitig ein Auspressen der Kartuschen und eine Betätigung der Mischeinrichtung mit einer Antriebsspindel möglich ist. Problematisch ist jedoch, daß zur Verschiebung der beiden Kolbeneinsätze durch diesen zentralen Spindelantrieb ein Getriebe und weitere Spindelantriebe erforderlich sind. Dies bedingt einen aufwendigen und auch störanfälligen Aufbau der Vorrichtung, der zudem aufgrund seiner vielen Bestandteile auch ein für einen Handbetrieb unerwünschtes Gewicht aufweist.

Darüber hinaus kann durch diese Spindelantriebe nicht vollständig sichergestellt werden, daß beide Kartuschen vollständig entleert sind. Aber auch bei vollständiger Entleerung der beiden Kartuschen verbleibt in den beiden zur Mischeinrichtung führenden, in dem Gehäuse angeordneten Leitungen eine Restmenge der Reaktionskomponenten, die im Laufe der Zeit aushärtet. Ein solches Gehäuse kann daher nur als Einweggehäuse verwendet werden.

Aus der DE 196 18 693 A sowie der DE 196 03 416 U gehen Kartuschen für in Folienbeutel abgefüllte Komponentenmassen mit parallel nebeneinander angeordneten und über eine gemeinsame Innenwandung verbundene Vorratszylinder hervor, auf deren vorderer Seite ein Kopfstück oder Deckelelement aufgesetzt ist. In dem Deckelelement sind voneinander getrennte in Axialrichtung verlaufende durch eine Trennwand getrennte Kanäle vorgesehen, die in eine Mischeinrichtung münden. Bei derartigen Vorrichtungen wird zwar ein vorzeitiges Vermischen der beiden Komponenten wirkungsvoll verhindert. Eine Vermischung von insbesondere zähflüssigen Mehrkomponentenmassen ist jedoch nur schwer möglich, da die Mischeinrichtung statisch ist. Darüber hinaus sind auch bei diesen Vorrichtungen die Zuführkanäle zur Mischeinrichtung verhältnismäßig lang, so daß bei einer vollständigen Entleerung der beiden Beutel ebenfalls eine nicht unbeträchtliche Restmenge in dem Deckelelement verbleibt.

Aufgabe der Erfindung ist es, eine gattungsgemäße Vorrichtung zum Auspressen und dosierten Abgeben von fließfähigen Mehrkomponentenmassen dahingehend weiterzubilden, daß bei einem möglichst einfachen, nur wenige Einzelteile aufweisenden und kompakten Aufbau ein funktionssicherer Betrieb gewährleistet ist, wobei insbesondere sichergestellt sein soll, daß die beiden flexiblen Beutel nahezu vollständig entleert werden können.

Diese Aufgabe wird erfindungsgemäß durch die Merkmale des Anspruchs 1 gelöst. Die erfindungsgemäße Vorrichtung hat den Vorteil, daß durch sie eine praktisch vollständige Entleerung der flexiblen Beutel möglich ist. Es verbleibt lediglich noch eine minimale Restmenge in dem als Einwegteil ausgebildeten Deckelelement. Durch die abnehmbare, für unterschiedliche Erfordernisse austauschbare Ausspritzdüse wird ferner nicht nur eine hohe Vielseitigkeit erzielt, es werden auch die nach Gebrauch der Vorrichtung wegzuwerfenden Teile auf das Deckelelement und die Ausspritzdüse reduziert. Aufgrund der Anordnung eines Lagers zur Lagerung der Mischeinrichtung in der Ausspritzdüse wird auf sehr vorteilhafte Weise ein äußerst kompakter Aufbau und, da das Lager mit jedem Austausch der Ausspritzdüse ebenfalls getauscht wird, ein sehr funktionssicherer Betrieb der Vorrichtung zum Auspressen und dosierten Abgeben von fließfähigen Mehrkomponentenmassen gewährleistet.

Der in dem Deckelelement ausgebildete Mischraum ist vorteilhafterweise so angeordnet, daß er mit der Antriebsspindel fluchtet und über seitlich angesetzte Kanäle mit den Aufnahmeräumen verbunden ist. Dies erlaubt einen besonders kompakten Aufbau mit geringem Volumen.

Bei einer besonders vorteilhaften Ausführungsform, die insbesondere ein praktisch vollständiges Entleeren der beiden flexiblen Beutel ermöglicht, ist vorgesehen, daß die beiden kolbenartigen Einsätze miteinander und mit einer in dem Gehäuse axial verschieblich gelagerten auf der Antriebsspindel umlaufenden Mutter starr verbunden sind. Hierdurch wird nicht nur ein funktionssicherer Betrieb der Vorrichtung gewährleistet, wobei insbesondere immer sichergestellt ist, daß auf beide flexible Beutel gleichzeitig Druck ausgeübt wird. Es wird auch das Gewicht der gesamten Vorrichtung insbesondere dadurch, daß die beiden kolbenförmigen Einsätze und die Mutter vorzugsweise einstückig ausgebildet sind, erheblich reduziert.

Es ist vorzugsweise dabei vorgesehen, daß die Antriebsspindel in einem zwischen den beiden Aufnahmeräumen angeordneten und mit diesen einstückig verbundenen Spindelraum drehbar gelagert ist.

Hinsichtlich der Ausbildung der Aufnahmeräume sind die unterschiedlichsten Ausführungsformen denkbar. Vorteilhafterweise ist vorgesehen, daß die Aufnahmeräume eine zylindrische, vorzugsweise kreiszylindrische Gestalt aufweisen. Eine solche kreiszylindrische Gestalt ist nicht nur auf einfache Weise herzustellen, sondern ermöglicht auch eine optimale Führung der kolbenartigen Einsätze mit großen Führungsflächen.

Die beiden kolbenförmigen. Einsätze sind vorzugsweise durch eine im wesentlich senkrecht zur Antriebsspindel verlaufende Traverse miteinander und mit der Mutter verbunden, wobei die Traverse in dem Gehäuse in Axialrichtung gleitverschieblich gelagert ist und jeweils zu den Aufnahmeräumen durchgängige, sich in Axialrichtung erstreckende Öffnungen durchragt.

Die Traverse weist vorzugsweise eine in Verschiebungsrichtung scheibenförmige Gestalt auf, die sich in Verschiebungsrichtung schlitzförmig erstreckende Öffnungen durchragt. Auf diese Weise weisen nicht nur die Öffnungen eine kleine Querschnittsfläche auf, die insbesondere im Hinblick auf ein dichtes Verschließen der die flexiblen Beutel der Mehrkomponentenmasse aufnehmenden Aufnahmeräume besonders vorteilhaft ist. Durch die in Verschiebungsrichtung scheibenförmige Gestalt der Traverse wird darüber hinaus auch eine große Stabilität und optimale Lagerung und Führung der Traverse ermöglicht.

Vorzugsweise sind die sich in Axialrichtung schlitzförmig erstreckenden Öffnungen durch Gliedermanschetten verschlossen, die durch eine Axialbewegung der Traverse auf- und zuziehbar sind.

Die Traverse ist durch zwischen den beiden zylindrischen Aufnahmeräumen angeordnete, sich in Verschiebungsrichtung vorzugsweise linienförmig erstreckende Lagerelemente verschieblich gelagert. Diese Lagerelemerite können beispielsweise in dem Gehäuse gespannte Stahldrähte oder dergleichen sein.

Um eine optimale und störungsfreie, insbesondere reibungsarme Betätigung der beiden kolbenförmigen Einsätze zu gewährleisten, ist vorteilhafterweise vorgesehen, daß die Antriebsspindel und die Mutter zusammen einen Kugelgewindeantrieb bilden.

Weitere Vorteile und Merkmale der Erfindung sind Gegenstand der nachfolgenden Beschreibung sowie der zeichnerischen Darstellung eines Ausführungsbeispiels.

In der Zeichnung zeigen:
- Fig. 1: eine Explosionsdarstellung einer von der Erfindung Gebrauch machenden Vorrichtung;
- Fig. 2: eine akkubetriebene, erfindungsgemäße Vorrichtung im montierten Zustand;
- Fig. 3: eine Seitenansicht des Gehäuses unter Weglassung des elektromotorischen Antriebs;

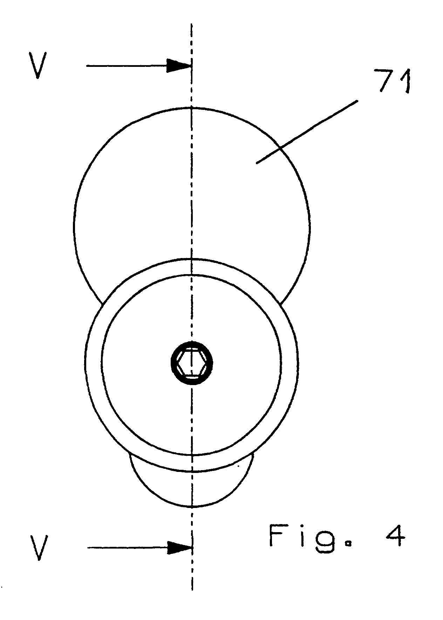

- Fig. 4: eine Stirnansicht des in Fig. 3 dargestellten Gehäuses;
- Fig. 5: eine Schnittdarstellung des Gehäuses entlang der Linie V - V in Fig. 4;
- Fig. 6: eine Schnittdarstellung des Gehäuses entlang der Linie VI - VI in Fig. 3;
- Fig. 7: eine Schnittdarstellung des Gehäuses entlang der Linie VII - VII in Fig. 3;
- Fig. 8: eine Schnittdarstellung des Gehäuses entlang der Linie VIII - VIII in Fig. 3 und
- Fig. 9: eine perspektivische Darstellung eines abnehmbaren Deckelelements einer erfindungsgemäßen Vorrichtung.

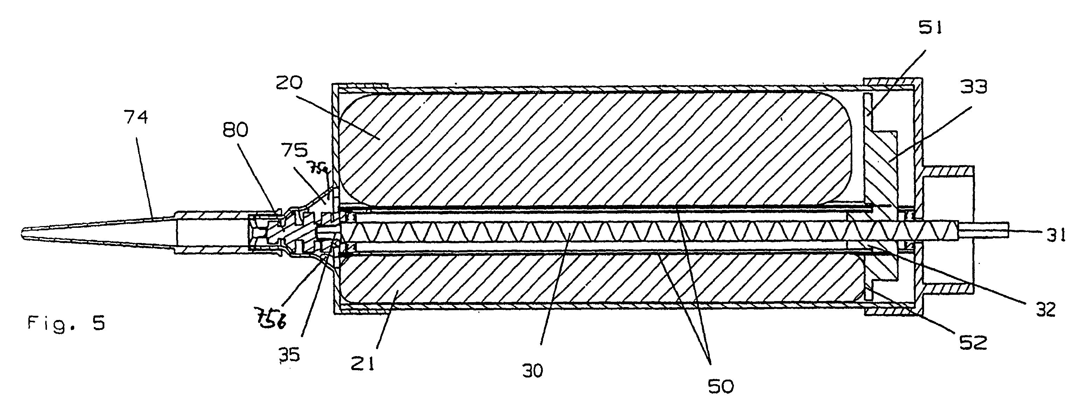

Eine Vorrichtung zum Auspressen und dosierten Abgeben von fließfähigen Mehrkomponentenmassen, dargestellt in der Zeichnung, umfaßt ein Gehäuse 10, das zur Aufnahme von zwei flexiblen Beuteln 20, 21 der fließfähigen Mehrkomponentenmasse zwei Aufnahmeräume 11 und 12 umfaßt. Zwischen den beiden im wesentlichen kreiszylinderförmig ausgebildeten Aufnahmeräumen 11, 12 ist ein Spindelraum 13 zur Aufnahme und Lagerung einer Antriebsspindel 30 über Lagerelemente 77 vorgesehen, die von einem an sich bekannten, netzbetriebenen Elektrowerkzeug 41 oder einem akkubetriebenen Werkzeug 42 antreibbar ist (siehe insbesondere Fig. 5). Die Antriebsspindel 30 weist hierzu an ihrem dem Elektrowerkzeug 41, 42 zugewandten Ende ein Formschlußprofil, vorzugsweise ein sechskantförmiges Profil 31 auf, das in eine auf sie angepaßte Aufnahme 43 bzw. 44 des Werkzeugs 41 bzw. 42 form- und kraftschlüssig einsetzbar ist.

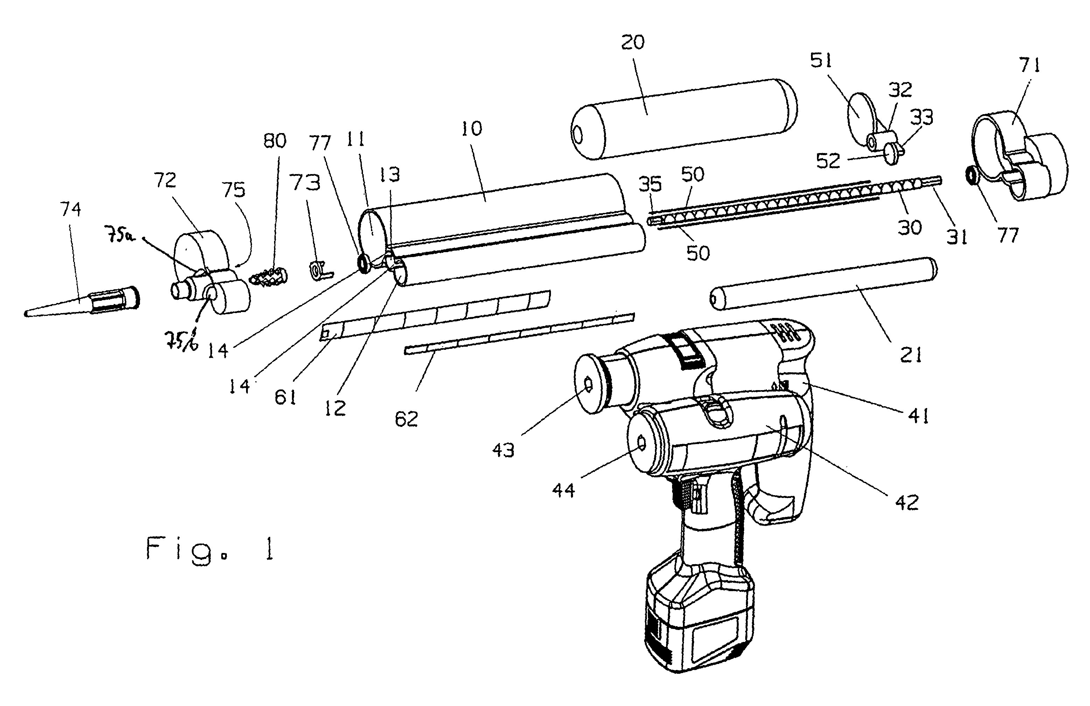

Auf der Antriebsspindel 30 läuft eine Mutter 32 um, die über eine sich in Verschiebungsrichtung scheibenförmig erstreckende Traverse 33 mit zwei kolbenförmigen Einsätzen 51, 52 starr verbunden ist (siehe Fig. 1 und Fig. 5). Im montierten Zustand gleiten die beiden kolbenförmigen Einsätze 51, 52 in den beiden Aufnahmeräumen 11, 12 angetrieben durch die Antriebsspindel 30 axial verschieblich und üben so einen Auspreßdruck auf die beiden flexiblen Behälter 20, 21 aus.

Zur Vermeidung eines auf die beiden kolbenförmigen Einsätze 51, 52 ausgeübten Drehmoments, das zu einer Erhöhung der Reibung bei einer Gleitverschiebung der kolbenförmigen Einsätze 51, 52 in den beiden Aufnahmeräumen 11, 12 führt, ist eine Lagerung der Traverse 33 in Verschiebungsrichtung durch in dem Gehäuse 10 in Axialrichtung gespannte Stahldrähte 50 oder andere sich linienförmig erstreckende Lagerelemente vorgesehen.

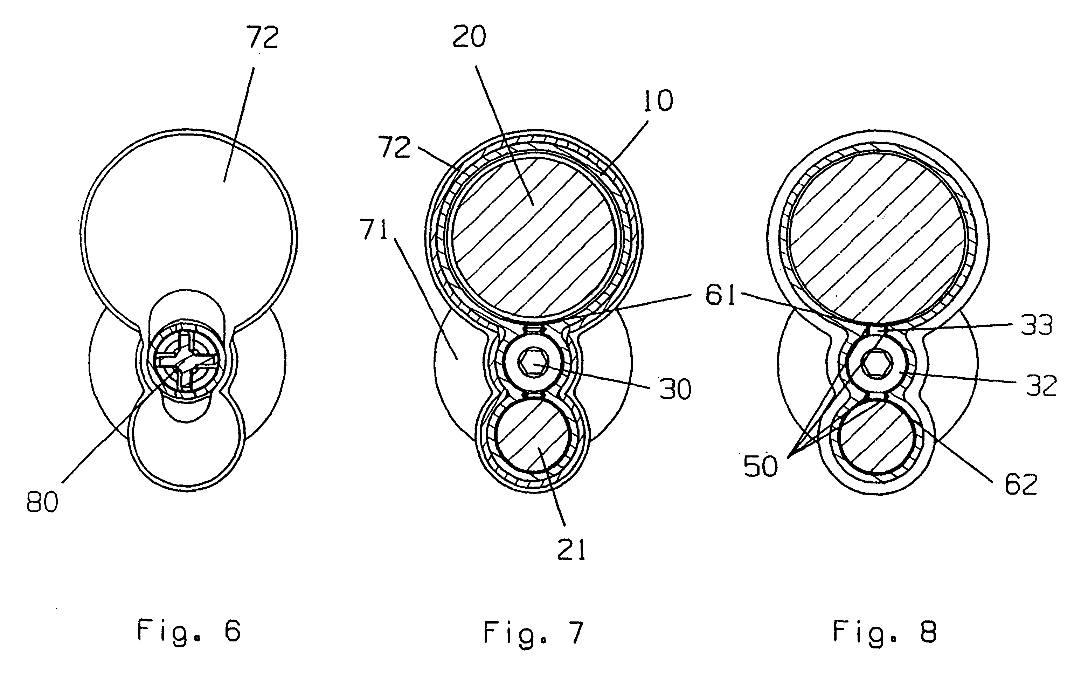

Wie insbesondere aus Fig. 1, Fig. 5 sowie Fig. 8 hervorgeht, sind in dem Gehäuse 10 sich in Verschieberichtung erstreckende, schlitzförmige, hin zu den beiden Aufnahmeräumen 11, 12 durchgängige Öffnungen 14 vorgesehen, durch welche die Traverse 33 hindurchragt. Diese scheibenförmigen Öffnungen 14 werden durch Gliedermanschetten 61, 62 verschlossen, die durch eine Axialbewegung der Traverse 33 auf- und zugezogen werden. Hierdurch wird vermieden, daß die in den Aufnahmeräumen 11, 12 vorhandenen Mehrkomponentenmassen zur Antriebsspindel 30 austreten und deren Funktion beeinträchtigen können.

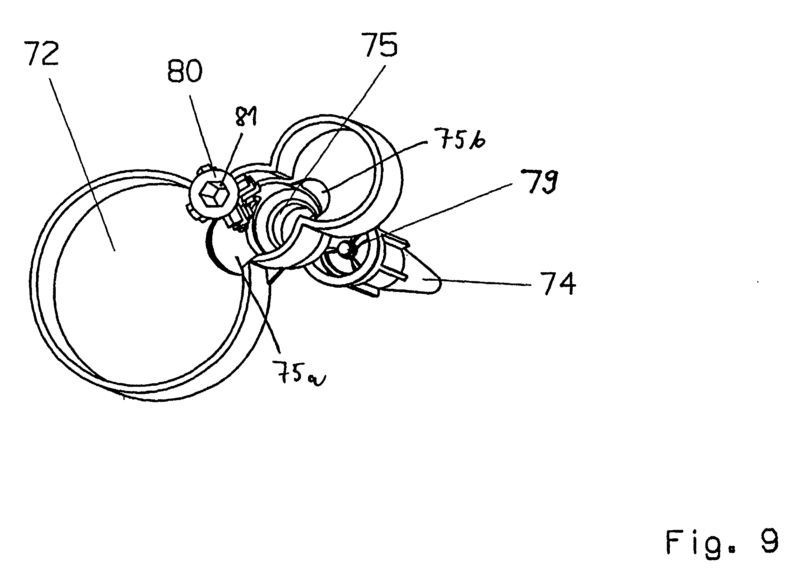

Das Gehäuse 10 ist stirnseitig durch Deckelelemente 71, 72 verschlossen. Der die Antriebsspindel 30 aufnehmende Aufnahmeraum 13 ist durch Dichtelemente 73 verschlossen. In dem ausspritzseitigen, abnehmbaren Deckelelement 72 ist zur Aufnahme einer Mischschnecke 80 ein Mischraum ausgebildet, in den die beiden Aufnahmeräume 11, 12 unmittelbar münden (siehe insbesondere Fig. 9). Die Ausspritzdüse 74 ist auf diesem Deckelelement 72 befestigbar.

Die Antriebsspindel 30 weist an ihrer der Mischschnecke 80 zugewandten Seite ebenfalls ein Formschlußprofil, z.B. ein sechskantförmiges Profil 35 auf, das in eine in der Mischschnecke 80 komplementär zu dem Profil 35 ausgebildete Aufnahme 81 eingreift. Durch eine Drehbewegung der Antriebsspindel 30 ist auf diese Weise die Mischschnecke 80 in eine Drehbewegung versetzbar, so daß in dem Mischraum 75 eine effektive Vermischung der beiden Komponenten erzielt wird. Die Mischschnecke 80 ist benachbart zur Ausspritzdüse 74 durch ein in der Ausspritzdüse 74 angeordnetes Lager 79 gelagert.

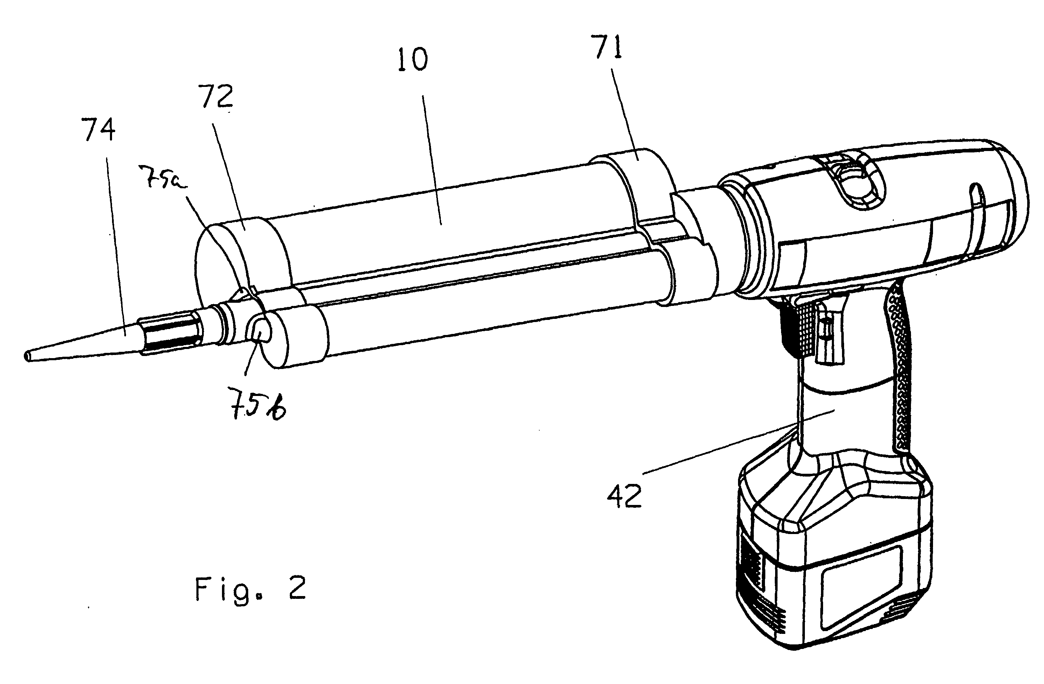

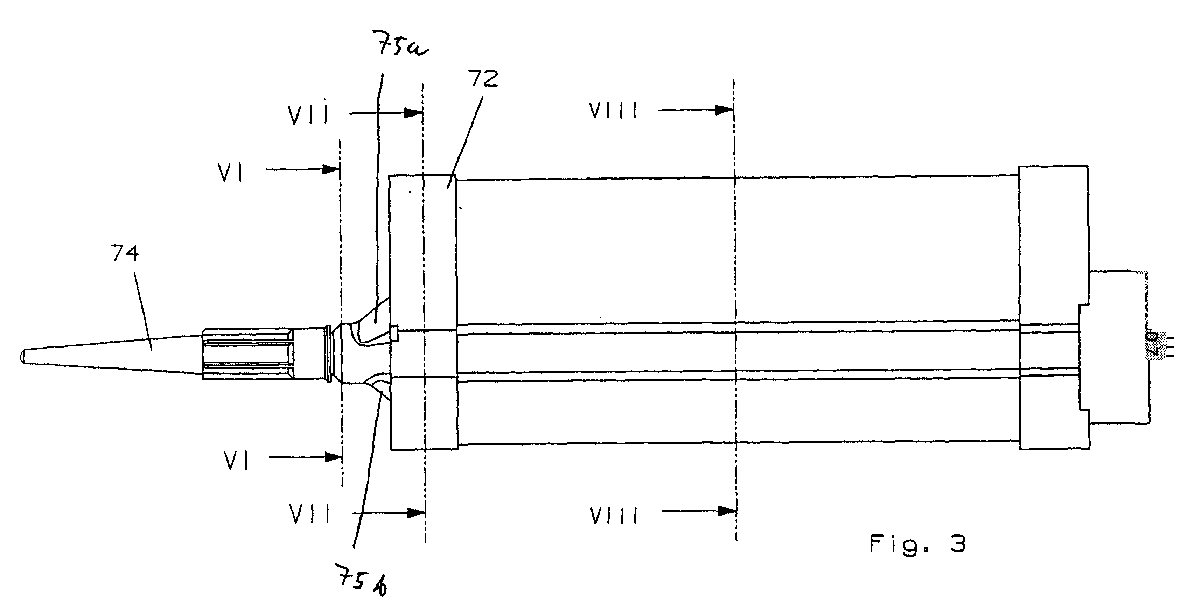

Wie insbesondere aus Fig. 1, Fig. 2, Fig. 3, Fig. 5 und Fig. 9 hervorgeht, fluchtet der Mischraum 75 mit der Antriebsspindel 30. In den Mischraum 75 münden die Aufnahmeräume 11, 12 über seitlich angesetzte Kanäle 75a, 75b. Die Anordnung des Mischraums 75 als Teil des Dekkelelements 72 und die Anordnung der in den Mischraum 75 seitlich einmündenden Mischkanäle 75a, 75b ermöglichen zusammen mit der obenbeschriebenen Führung der kolbenförmigen Einsätze 51, 52 eine praktisch vollständige Entleerung der beiden flexiblem Beutel 20, 21, wobei in dem Gehäuse 10, d.h. in den beiden Aufnahmeräumen 11, 12 sowie in dem abnehmbaren Deckelelement 72 nur eine geringe Restmenge der Mehrkomponentenmasse verbleibt. Besonders vorteilhaft dabei ist auch, daß nur das Deckelelement 72 sowie die Ausspritzdüse 74 nach dem Gebrauch der Vorrichtung weggeworfen werden müssen, wohingegen das Gehäuse 10 immer wieder verwendbar ist.

Die Funktion der Vorrichtung ist folgende:
Durch eine Betätigung des netz- oder akkubetriebenen Handwerkzeugs 41, 42 wird die Antriebsspindel 30 in eine Drehbewegung versetzt, wodurch sich die beiden kolbenförmigen Einsätze 51, 52 hin zu der Ausspritzdüse 74 bewegen. Gleichzeitig wird die Mischschnecke 80 in dem Aufnahmeraum 75 in eine Drehbewegung versetzt. Durch diese Drehbewegung der Mischschnecke 80 wird zum einen der Druck verringert, der auf die beiden kolbenförmigen Einsätze 51, 52 beim Anspannen wirkt, zum andern wird eine gute Vermischung der beiden Komponenten der mehrkomponentigen pastösen Masse erzielt. Hierdurch werden die Auspreßkräfte wesentlich reduziert, so daß nur ein kleinerer Antriebsmotor, d.h. ein kleines Handwerkzeug 41, 42 erforderlich ist. Hieraus resultiert auch insbesondere ein kleinerer, kompakter und dadurch kostensparender Aufbau der gesamten Vorrichtung, der verbunden ist mit einer Gewichtsreduktion gegenüber an sich bekannten Vorrichtungen.

## Patentansprüche

1. Vorrichtung zum Auspressen und dosierbaren Abgeben von fließfähigen Mehrkomponentenmassen unter Einwirkung eines Drucks auf flexible Beutel für die einzelnen Komponenten umfassend ein Gehäuse (10) mit wenigstens zwei stirnseitig durch ein abnehmbares Deckelelement verschließbaren Aufnahmeräumen (11, 12) für die flexiblen Beutel (21, 22), zwei in den Aufnahmeräumen verschieblich geführte kolbenartige Einsätze (51, 52) zur Erzeugung des Drucks auf die flexiblen Beutel (21, 22), eine mit einer Ausspritzdüse (74) versehene Mischeinrichtung (80) und eine Antriebseinheit und eine Antriebsspindel (30), die sowohl die kolbenartigen Einsätze (51, 52) als auch die Mischeinrichtung (80) antreibt, wobei die beiden Aufnahmeräume (11, 12) in einen in dem Dekkelelement (72) ausgebildeten, die Mischeinrichtung (80) aufnehmenden Mischraum (75) münden, und wobei der Mischraum (75) ausspritzseitig durch eine abnehmbare Ausspritzdüse (74) verschlossen ist, **dadurch gekennzeichnet, daß** in der Ausspritzdüse (74) ein Lager (79) der Mischeinrichtung (80) angeordnet ist und daß die Antriebseinheit einen Elektromotor umfaßt.

2. Vorrichtung nach Anspruch 1, **dadurch gekennzeichnet, daß** der Mischraum (75) mit der Antriebsspindel (30) fluchtet und über seitlich angesetzte Kanäle (75a, 75b) mit den Aufnahmeräumen (11, 12) verbunden ist.

3. Vorrichtung nach Anspruch 1 oder 2, **dadurch gekennzeichnet, daß** die beiden kolbenartigen Einsätze (51, 52) miteinander und mit einer in dem Gehäuse (10) axialverschieblich gelagerten, auf der Antriebsspindel (30) umlaufenden Mutter (33) starr verbunden sind.

4. Vorrichtung nach einem der Ansprüche 1 bis 3, **dadurch gekennzeichnet, daß** die Antriebsspindel (30) in einem zwischen den beiden Aufnahmeräumen (11, 12) angeordneten und mit diesen einstückig verbundenen ausspritzseitig abgedichteten Spindelraum (13) drehbar gelagert ist.

5. Vorrichtung nach einem der Ansprüche 1 bis 4, **dadurch gekennzeichnet, daß** die Aufnahmeräume eine zylindrische, vorzugsweise kreiszylindrische Gestalt aufweisen.

6. Vorrichtung nach einem der Ansprüche 1 bis 5, **dadurch gekennzeichnet, daß** die beiden kolbenförmigen Einsätze (51, 52) durch eine im wesentlichen senkrecht zur Antriebsspindel (30) verlaufende Traverse (33) miteinander und mit der Mutter 32 verbunden sind, wobei die Traverse (33) in dem Gehäuse (10) in Axialrichtung gleitverschieblich gelagert ist und jeweils zu den Aufnahmeräumen (11, 12) durchgängige, sich in Axialrichtung erstrekkende Öffnungen (14) durchragt.

7. Vorrichtung nach Anspruch 6, **dadurch gekennzeichnet, daß** die Traverse (33) eine sich in Verschiebungsrichtung scheibenförmige Gestalt aufweist, die sich in Verschiebungsrichtung schlitzförmig erstreckende Öffnungen (14) durchragt.

8. Vorrichtung nach einem der Ansprüche 6 oder 7, **dadurch gekennzeichnet, daß** die sich in Axialrichtung schlitzförmig erstreckenden Öffnungen (14) durch Gliedermanschetten (61, 62) verschlossen sind, welche durch eine Axialbewegung der Traverse (33) auf- und zuziehbar ist.

9. Vorrichtung nach einem der Ansprüche 6 bis 8, **dadurch gekennzeichnet, daß** die Traverse (33) zwischen den beiden kreiszylindrischen Aufnahmeräumen (11, 12) durch sich in Verschiebungsrichtung erstreckende linienförmige Lagerelemente (50) gleitverschieblich gelagert ist.

10. Vorrichtung nach einem der Ansprüche 1 bis 9, **dadurch gekennzeichnet, daß** das Gehäuse (10) ein Spritzguß- oder Strangpreßteil ist.

11. Vorrichtung nach einem der Ansprüche 1 bis 10, **dadurch gekennzeichnet, daß** die Antriebsspindel (30) eine Kugelgewindespindel ist.

## Claims

1. A device for expressing and dispensing dosed quantities of flowable multi-component compounds by the action of pressure on flexible bags for the individual components, comprising a housing (10) having at least two receiving chambers (11, 12) provided for the flexible bags (20, 21) and closable at the end by a removable cover member, two plunger-type inserts (51, 52) for generating the pressure on the flexible bags (20, 21) and displaceably guided in the receiving chambers, a mixing device (80) provided with an ejection nozzle (74), and a drive unit and a drive spindle (30) which drives both the plunger-type inserts (51, 52) and the mixing device (80), wherein the two receiving chambers (11, 12) open into a mixing chamber (75) formed in the cover member (72) and receiving the mixing device (80), and wherein the mixing chamber (75) is closed at the ejection end by a removable ejection nozzle (74), **characterised in that** a bearing (79) for the mixing device (80) is arranged in the ejection nozzle (74) and **in that** the drive unit comprises an electric motor.

2. A device according to claim 1, **characterised in that** the mixing chamber (75) is aligned with the drive spindle (30) and is connected to the receiving chambers (11, 12) by laterally extending channels (75a, 75b).

3. A device according to claim 1 or 2, **characterised in that** the two plunger-type inserts (51, 52) are rigidly connected to one another and to a nut (32) axially displaceably mounted in the housing (10) and rotating on the drive spindle (30).

4. A device according to any one of claims 1 to 3, **characterised in that** the drive spindle (30) is rotatably mounted in a spindle chamber (13) arranged between and integrally connected to the two receiving chambers (11, 12) and sealed at the ejection end.

5. A device according to any one of claims 1 to 4, **characterised in that** the receiving chambers have a cylindrical, preferably circular cylindrical shape.

6. A device according to any one of claims 1 to 5, **characterised in that** the two plunger-type inserts (51, 52) are connected to one another and to the nut (32) by a crossbar (33) extending substantially perpendicularly to the drive spindle (30), wherein the crossbar (33) is mounted in the housing (10) so as to be slidable in the axial direction and projects through openings (14) extending in the axial direction and opening into the receiving chambers (11, 12).

7. A device according to claim 6, **characterised in that** the crossbar (33) is disc-shaped in the direction of displacement and projects through slot-shaped openings (14) extending in the direction of displacement.

8. A device according to either one of claims 6 and 7, **characterised in that** the slot-shaped openings (14) extending in the axial direction are closed by articulated sealing members (61, 62) which are openable and closable by an axial movement of the crossbar (33).

9. A device according to any one of claims 6 to 8, **characterised in that** the crossbar (33) is slidably mounted between the two circular cylindrical receiving chambers (11, 12) by linear bearing members (50) extending in the direction of displacement.

10. A device according to any one of claims 1 to 9, **characterised in that** the housing (10) is an ejection-moulded or extruded part.

11. A device according to any one of claims 1 to 10, **characterised in that** the drive spindle (30) is a ball-and-screw spindle.

## Revendications

1. Dispositif pour le mélange et l'application dosée de masses coulantes à plusieurs composants obtenues en exerçant une pression sur des sachets flexibles contenant les composants individuels, comprenant :
- un boîtier (10) avec au moins deux réceptacles (11, 12) obturables frontalement par un couvercle amovible, pour accueillir les sachets flexibles (21, 22),
- deux inserts (51, 52) du genre pistons, coulissant dans les réceptacles pour produire le pression sur les sachets flexibles (21, 22),
- un dispositif mélangeur (80) équipé d'une buse d'éjection (74),
- une unité d'entraînement avec une broche d'entraînement (30), entraînant aussi bien les inserts (51, 52) en forme de pistons que le dispositifs mélangeur (80),
- dans le couvercle (72), une chambre de ménage (75) contenant le dispositif mélangeur (80) et dans laquelle débouchent les deux réceptacles (11, 12) cette chambre (75) était obturée, du côté de l'éjection, par une buse d'éjection (74) amovible,
**caractérisé en ce que**
dans la buse d'éjection (74) se trouve un palier (79) du dispositif mélangeur (80) et l'unité d'entraînement comprend un moteur électrique.

2. Dispositif selon le revendication 1,
**caractérisé en ce que**
la chambre de mélange (75) est aliguée avec la broche d'entraînement (30) et reliée par des canaux (75a, 75b) raccordés latéralement aux réceptacles (11, 12).

3. Dispositif selon l'une quelconque des revendications 1 ou 2,
**caractérisé en ce que**
les deux inserts (51, 52) du genre pistons sont reliés rigidement ensemble et à un écrou (32) monté coulissant axialement dans le boîtier (10) par déplacement sur la broche d'entraînement (30).

4. Dispositif selon l'une quelconque des revendications 1 à 3,
**caractérisé en ce que**
la broche d'entraînement (30) est montée tournante dans un logement de broche (13) situé entre les deux réceptacles (11, 12), monobloc avec ceux-ci, et étanche du côté de l'éjection.

5. Dispositif selon l'une quelconque des revendications 1 à 4,
**caractérisé en ce que**
les réceptacles ont une forme cylindrique, circulaire de préférence.

6. Dispositif selon l'une quelconque des revendications 1 à 5,
**caractérisé en ce que**
les deux inserts (51, 52) en forme de pistons sont, par une traverse (33) essentiellement perpendiculaire à la broche d'entraînement (30), reliés entre eux et à l'écrou (32), la traverse (33) pouvant coulisser dans le boîtier (10) en direction axiale en passant dans des ouvertures (14) s'étendant en direction axiale et communiquant avec les réceptacles (11, 12).

7. Dispositif selon la revendication 6,
**caractérisé en ce que**
la traverse (33) dans sa direction de coulissement est configurée avec des disques et passe à travers des ouvertures (14) en forme de fentes s'étendant dans la direction de coulissement.

8. Dispositif selon l'une quelconque des revendications 6 ou 7,
**caractérisé en ce que**
les ouvertures (14) en forme de fentes s'étendant dans la direction de coulissement sont obturées par des manchettes articulées (61, 62) pouvant être étirées ou compactées par déplacement axial de la traverse (33).

9. Dispositif selon l'une quelconque des revendications 6 à 8,
**caractérisé en ce que**
la traverse (33) est montée en pouvant coulisser entre les deux réceptacles cylindriques (11, 12) au moyen d'éléments de palier (50) linéaires s'étendant dans la direction de coulissement.

10. Dispositif selon l'une quelconque des revendications 1 à 9,
**caractérisé en ce que**
le boîtier (10) est une pièce réalisée par injection ou par extrusion.

11. Dispositif selon l'une quelconque des revendications 1 à 10,
**caractérisé en ce que**
la broche d'entraînement (30) est une vis d'entraînement à billes.
